Europäisches Patentamt

European Patent Office

Office européen des brevets

(11) Numéro de publication : **0 440 059 B1**

(12) **FASCICULE DE BREVET EUROPEEN**

(19)

(45) Date de publication du fascicule du brevet :
**21.09.94 Bulletin 94/38**

(21) Numéro de dépôt : **91100681.5**

(22) Date de dépôt : **21.01.91**

(51) Int. Cl.⁵ : **H04J 3/16**

---

(54) **Procédé de transmission d'octets mettant en oeuvre une trame synchrone associant des cellules asynchrones à des canaux isochrones.**

---

(30) Priorité : **22.01.90 FR 9000705**

(43) Date de publication de la demande :
**07.08.91 Bulletin 91/32**

(45) Mention de la délivrance du brevet :
**21.09.94 Bulletin 94/38**

(84) Etats contractants désignés :
**AT BE CH DE DK ES FR GB IT LI LU NL SE**

(56) Documents cités :
**EP-A- 0 214 352**
**IBM TECHNICAL DISCLOSURE BULLETIN, vol. 29, no. 12, mai 1987, pages 5225-5228, New York, US; N.N.: "Dynamic slot assignment in TDM frames"**

(56) Documents cités :
**NACHRICHTENTECHNISCHE ZEITSCHRIFT, vol. 41, no. 10, octobre 1988, pages 571-574, Berlin, DE; W. Ehrlich et al.: "Die neue synchrone digitale Hierarchie"**
**IEEE COMMUNICATIONS MAGAZINE, vol. 29, no. 3, mars 1989, pages 8-15, New York, US; R. BALLART et al.: "SONET: Now it's the standard optical network"**

(73) Titulaire : **ALCATEL BUSINESS SYSTEMS**
**12, rue de la Baume**
**F-75008 Paris (FR)**

(72) Inventeur : **Gass, Raymond**
**18, rue des Vergers,**
**Bolsenheim**
**F-67150 Erstein (FR)**
Inventeur : **Cordonnier, Christine**
**43A, rue du Moulin**
**F-67200 Wolfisheim (FR)**

(74) Mandataire : **Weinmiller, Jürgen et al**
**Lennéstrasse 9**
**Postfach 24**
**D-82336 Feldafing (DE)**

EP 0 440 059 B1

## Description

L'invention concerne un procédé de transmission d'octets mettant en oeuvre une trame synchrone associant des cellules asynchrones à des canaux isochrones sur une jonction multiplexe temporelle pour laquelle la trame de base correspond à un débit primaire de 2,048 Mb/s.

La recommandation G.704 du Comité Consultatif International Télégraphique et Téléphonique (CCITT) définit différentes structures de trame synchrone destinées à permettre le transfert de signaux numériques arrangés sous forme d'octets.

La trame, définie par la recommandation G.704 pour les jonctions dont le débit est de 2,048 Mb/s, offre trente deux canaux isochrones correspondants chacun à un intervalle de temps, de rang déterminé, dans chacune des trames successives dont la périodicité est de 125 μs.

Les trames consécutives sont regroupées seize par seize en multitrames et permettent la scission de certains canaux tels le premier, dit de rang zéro, et éventuellement le dix septième, dit de rang seize, en voies à faible débit, ces voies servant notamment à la transmission de bits de verrouillage de trame et de multitrame, ou de signalisation si besoin est.

Des canaux isochrones sont réservés au cours des trames, si au moins une partie des octets à transmettre correspond à des signaux transmis à partir d'équipements de multiplexage MIC primaire, tels que définis par la recommandation G.732 du CCITT, qui permettent la transmission de signaux de parole sous forme d'octets obtenus par codage après échantillonnage. Un canal dont le débit est de 64kb/s permet alors la transmission des signaux codés relatifs à un des deux sens d'une communication établie par exemple entre deux postes téléphoniques.

Des canaux sont aussi réservés au cours des trames, si au moins une partie des octets à transmettre sont issus d'équipements de multiplexage d'informations numériques regroupées sous forme de paquets ou plus précisément de cellules organisées selon le standard IEEE 802.6 défini par l'organisation intitulée "Institute of Electrical and Electronics Engineers".

Ces cellules sont destinées à la transmission asynchrone de paquets de données dont la longueur est fixe et correspond à cinquante trois octets, ces derniers sont répartis en cinq octets de service placés en tête de cellule et en quarante huit octets utilisables pour les données à transmettre.

Or dans certaines conditions d'exploitation, il peut s'avérer avantageux de transmettre conjointement des octets de canaux synchrones et de cellules isochrones, par exemple pour éviter la mise en oeuvre de deux liaisons spécialement affectées l'une aux canaux et l'autre aux cellules, lorsque les débits respectifs de données utiles autorisent une transmission conjointe par l'intermédiaire d'une seule liaison, moyennant la mise en place d'une organisation prévue à cet effet.

L'invention propose donc à cet effet un procédé de transmission d'octets qui, mettant en oeuvre une trame synchrone associant des cellules asynchrones à des canaux isochrones sur une jonction multiplexe temporelle, permette d'optimiser l'utilisation de la largeur de bande de transmission offerte et d'adapter le nombre de canaux isochrones exploités,en fonction des besoins dans le cas d'une transmission pour laquelle la trame de base correspond à un débit primaire de 2,048 Mb/s, telle que définie ci-dessus.

Les informations sont transmises au cours de multitrames successives comportant chacune un même nombre de trames également successives qui sont composées chacune d'un même nombre d'intervalles de temps, les intervalles de temps de même rang au cours des trames successives formant un canal de transmission d'informations, octet par octet, un premier canal de chaque trame étant réservé pour des données de gestion indépendantes des informations à transmettre. Selon une caractéristique de l'invention, des seconds canaux de chaque trame au cours d'une multitrame sont réservés à des données de service de chemin qui se répartissent en un premier groupe d'un nombre déterminé de seconds canaux de rangs déterminés, réservés aux octets de service des cellules asynchrones de transmission d'informations, et en un second groupe de seconds canaux, dont le nombre est au plus égal à la différence entre le nombre total de canaux disponibles par trame et le nombre de canaux du premier groupe, qui sont réservés pour préciser le nombre de canaux isochrones de transmission d'informations exploités au cours de la trame dont chacun d'eux fait partie, ainsi qu'éventuellement au cours de la trame suivante si le second canal de celle-ci est un second canal du premier groupe. Un troisième canal (TS2) de chacune des trames successives est au moins partiellement réservé à un code définissant un rang de canal de début de cellule pour toute cellule apparaissant au cours de la trame considérée, les dits troisièmes canaux correspondant à des intervalles de temps succédant immédiatement à ceux des seconds canaux qui eux-mêmes succèdent immédiatement à ceux des premiers canaux au cours des trames.

L'invention, ses caractéristiques et ses avantages sont précisés dans la description qui suit en relation avec les figures répertoriées ci-dessous.

La figure 1 présente une structure de multitrame selon l'invention.

La figure 2 présente un exemple d'organisation de multitrame obtenue en l'absence d'octets transmis par des canaux isochrones.

La figure 3 présente un exemple d'organisation de multitrame obtenue en cas de présence conjointe d'octets de canaux isochrones et de cellules asynchrones.

Comme indiqué plus haut, la structure de base des trames et multitrames définies par la recommandation G.704 prévoit une trame supportant trente deux canaux et une supertrame de seize trames consécutives, chaque trame ayant une durée de 125µs.

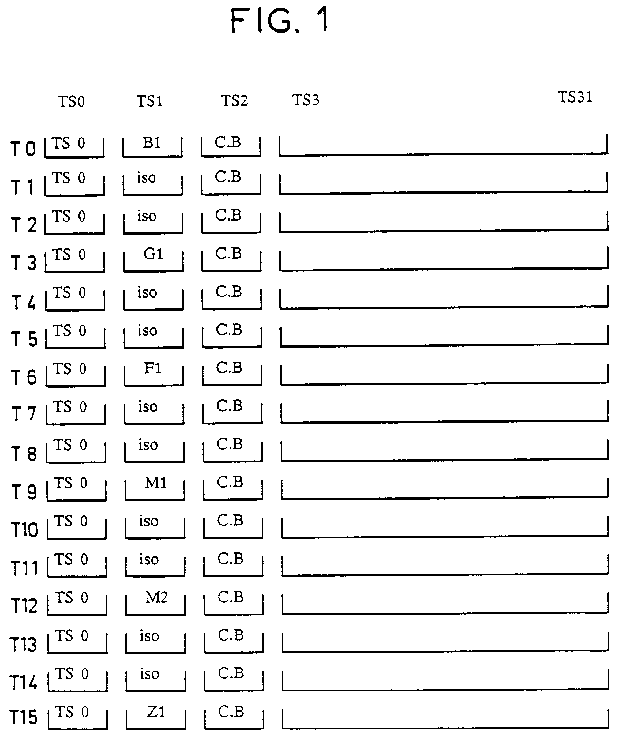

Le premier canal référencé TS0 de chaque trame correspond à l'intervalle de temps identiquement référencé TS0 pour chacune des différentes trames référencées T0 à T15 d'une multitrame telle que présentée sur la figure 1, il est réservé à la transmission de bits relatifs aux informations de verrouillage de trame et de multitrame, à des informations de contrôle de redondance cyclique (CRC), à des indications d'alarme distante et à des bits de réserve, l'ensemble étant configuré d'une manière connue que précise la recommandation citée ci-dessus.

Les seconds et troisièmes canaux de chaque trame qui sont référencés TS1 et TS2 sont ici réservés pour des informations de service de chemin relatives d'une part aux cellules asynchrones transmises d'autre part aux canaux isochrones temporairement associés à ces cellules pendant la phase de transmission considérée.

Dans une forme de réalisation, le second canal référencé TS1 d'une trame sur trois de la multitrame est réservé aux octets de chemin des cellules asynchrones, alors que les troisièmes canaux TS2 de toutes les trames sont réservés pour les indications de début des cellules asynchrones.

Dans le cas de cellules selon le standard IEEE 802.6, le second canal TS1 de la première trame référencée T0 de chaque multitrame est par exemple réservé à la transmission d'un octet B1 de parité à bits entrelacés, le second canal TS1 de la quatrième trame T3 est alors réservé pour un octet G1 d'état de chemin pour cellule isochrone, le second canal TS1 de la septième trame T6 étant réservé pour un octet F1 de canal utilisateur de cellule isochrone. De même les canaux TS1 de la dixième, et de la treizième trames T9, T12 sont respectivement réservés à deux octets M1 et M2 d'information de gestion de couche de cellule asynchrone, prévus par le standard évoqué ci-dessus.

Les seconds canaux TS1 des autres trames d'une multitrame, à l'exception de la dernière référencée T15, sont affectés à la transmission d'octets, référencés iso sur les figures et relatifs au nombre d'octets isochrones transmis, chaque second canal TS1 de ces autres trames précisant le nombre d'octets isochrones transmis par la trame qui le comporte et éventuellement par la trame suivante lorsque cette dernière est l'une des trames T0, T3, T6, T9, T12, T15 contenant d'autres informations.

Le second canal TS1 de la dernière trame T15 d'une multitrame est par exemple mis en réserve pour usage ultérieur et transmet un octet non significatif, référencé Z1.

Cinq bits suffisent à la transmission du nombre d'octets isochrones susceptibles d'être incorporés dans une trame puisque ce nombre est nécessairement inférieur à 29.

Ayant réservé cinq bits de chaque octet des seconds canaux TS1 comportant une indication de nombre d'octets isochrones pour la transmission de cette indication, il est possible d'exploiter les trois bits restants d'un octet pour un contrôle de parité des bits constituant l'indication en cinq bits contenue dans cet octet. Un exemple d'une telle disposition est donnée dans le tableau ci-dessous où le sixième bit traduit la parité impaire des bits 1,2,3,4 d'un octet , alors que le septième bit traduit la parité impaire des bits 3,4,5 et 6, une indication caractéristique de continuation de cellule sans changement figurant en l'absence d'octets isochrones dans une trame.

EP 0 440 059 B1

| Nombre d'octets isochrones | Adresse de début cellule | code | Nombre d'octets isochrones | Adresse de début de cellule | code |
|---|---|---|---|---|---|
| 0 | COC | 04H | 16 | 16 | 82H |
| 1 | - | 0FH | 17 | 17 | 89H |
| 2 | - | 11H | 18 | 18 | 97H |
| 3 | 3 | 1AH | 19 | 19 | 9CH |
| 4 | 4 | 20H | 20 | 20 | A6H |
| 5 | 5 | 2BH | 21 | 21 | ADH |
| 6 | 6 | 35H | 22 | 22 | B3H |
| 7 | 7 | 3EH | 23 | 23 | B8H |
| 8 | 8 | 43H | 24 | 24 | C5H |
| 9 | 9 | 48H | 25 | 25 | CEH |
| 10 | 10 | 56H | 26 | 26 | D0H |
| 11 | 11 | 5DH | 27 | 27 | DBH |
| 12 | 12 | 67H | 28 | 28 | E1H |
| 13 | 13 | 6CH | 29 | 29 | E4H |
| 14 | 14 | 72H | - | 30 | F4H |
| 15 | 15 | 79H | - | 31 | FFH |

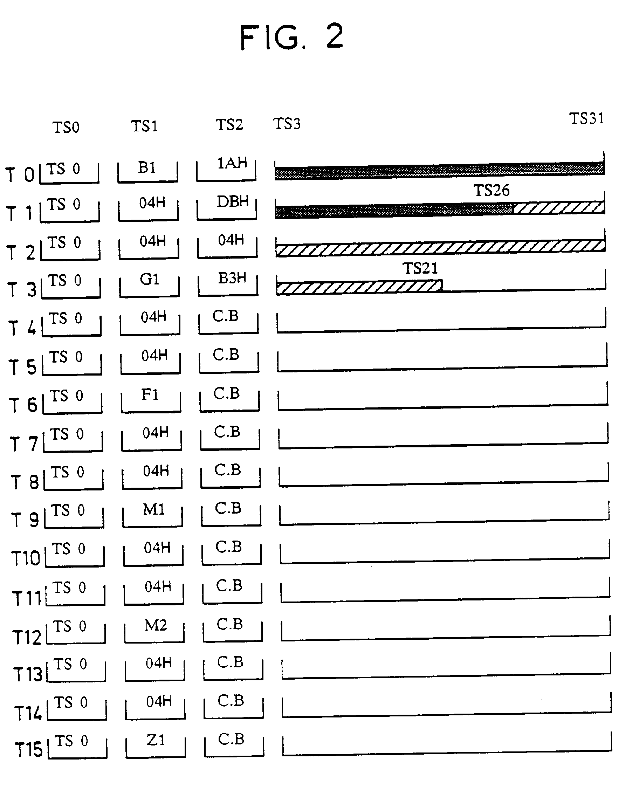

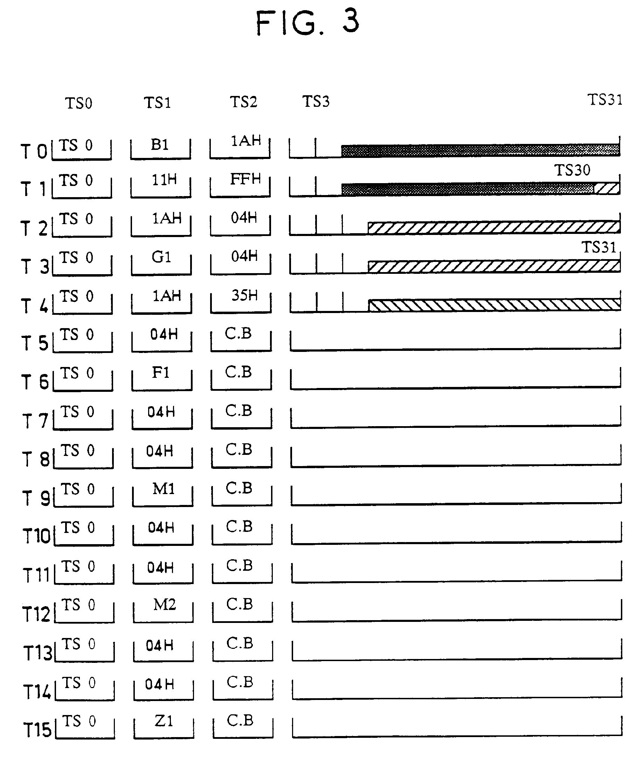

Les vingt neuf canaux restants de chaque trame sont mis en oeuvre pour la transmission des octets de l'information à transmettre, proprement dite, les figures 2 et 3 proposent deux exemples dans lesquels le contenu des seules premières trames est symbolisé.

Comme indiqué plus haut, le premier canal TS0 de chaque trame d'une multitrame contient un octet établi en application de la recommandation G.704 qui n'est pas modifié par le procédé selon l'invention.

Les seconds canaux des trames T0, T3, T6, T9, T12, T15 contiennent respectivement les octets B1, G1, F1, M1, M2, Z1 définis ci-dessus.

Les seconds canaux des autres trames contiennent une indication correspondant à un nombre nul de canaux isochrones, soit le code 04H selon l'exemple donné dans le tableau figurant ci-dessus, lorsqu'aucun canal isochrone n'est nécessaire comme montré figure 2. En tout autre cas ils contiennent un code correspondant au nombre de canaux isochrones qui figurent dans la trame dont ils font partie. Ainsi les seconds canaux TS1 de la deuxième trame T1 et de la troisième trame T2, montrées en figure 3, contiennent respectivement les codes 11H et 1AH caractéristiques de la présence de deux canaux isochrones en trame T1 et trois canaux isochrones en trame T2.

Ces canaux isochrones sont transmis immédiatement à la suite des trois canaux TS0,TS1,TS2 dans les trames qui les comportent, ainsi que le symbolise la présence de deux respectivement deux et trois créneaux, après le créneau symbolisant le canal TS2, sur la figure 3.

Les troisièmes canaux TS2 des trames T0 à T3, présentées en figure 2, contiennent, comme on l'a vu, chacune le code du canal initial de la cellule qui y débute, tel le code 1AH, caractéristique d'un canal TS3 de rang 4 pour la trame T0 et le code DBH, caractéristique d'un canal TS27 de rang 28, pour la nouvelle cellule symbolisée en hachuré sur la figure 2 et ainsi de suite. L'extension de cette dite nouvelle cellule sur la totalité des canaux utiles TS3 à TS31 de la trame T2 de rang trois se traduit en conséquence par la présence d'un code 04H dans le canal TS1 de cette trame.

Il en va bien entendu de même pour les exemples donnés en figure 3, les octets de cellules asynchrones étant disposés, au cours des trames successives,dans les canaux qui succèdent à ceux qui contiennent des octets isochrones, si de tels octets isochrones sont présents.

4

## Revendications

**1.** Procédé de transmission d'octets d'information mettant en oeuvre une trame synchrone associant des cellules asynchrones à des canaux isochrones sur une jonction multiplexe temporelle par l'intermédiaire de laquelle les informations sont transmises au cours de multitrames successives comportant chacune un même nombre de trames également successives qui sont composées chacune d'un même nombre d'intervalles de temps, les intervalles de temps de même rang au cours des trames successives formant un canal de transmission d'informations, octet par octet, un premier canal (TS0) de chaque trame étant réservé pour des données de gestion indépendantes des informations à transmettre, caractérisé en ce que des seconds canaux (TS1) de chaque trame au cours d'une multitrame sont réservés à des données de service de chemin qui se répartissent en un premier groupe d'un nombre déterminé de seconds canaux de rangs déterminés, réservés aux octets de service des cellules asynchrones de transmission d'informations, et en un second groupe de seconds canaux, dont le nombre est au plus égal à la différence entre le nombre total de canaux disponibles par trame et le nombre de canaux du premier groupe, qui sont réservés pour préciser le nombre de canaux isochrones de transmission d'informations exploités au cours de la trame dont chacun d'eux fait partie, ainsi qu'éventuellement au cours de la trame suivante si le second canal de celle-ci est un second canal du premier groupe, et en ce que le troisième canal (TS2) de chacune des trames successives est au moins partiellement réservé à un code définissant un rang de canal de début de cellule pour toute cellule apparaissant au cours de la trame considérée, les dits troisièmes canaux correspondants à des intervalles de temps succédant immédiatement à ceux des seconds canaux qui eux-mêmes succèdent immédiatement à ceux des premiers canaux au cours des trames.

**2.** Procédé de transmission selon la revendication 1, caractérisé en ce que les canaux correspondants aux intervalles de temps succédant successivement aux trois premiers intervalles de temps au cours des trames successives sont affectés aux canaux isochrones de transmission d'informations qui sont nécessaires au cours de la trame considérée, les canaux correspondants à des intervalles de temps ultérieurs de la trame étant exploités pour les octets de transmission d'informations des cellules.

**3.** Procédé de transmission selon la revendication 1, caractérisé en ce que chaque troisième canal comporte, à chaque trame, une indication de contrôle de parité associée au code qu'il contient.

**4.** Procédé de transmission selon au moins l'une des revendications 1 à 3, dans lequel la multitrame comporte seize trames, la trame trente deux intervalles de temps et les cellules asynchrones cinq octets de service, caractérisé en ce que les cinq intervalles de temps nécessaires à la transmission des octets de service de cellule au cours d'une multitrame sont répartis toutes les trois trames dans les seconds canaux des trames à partir de la première trame de multitrame, les autres seconds canaux entre lesquels ils s'imbriquent dans ces multitrames étant essentiellement affectés chacun à l'indication du nombre de canaux isochrones présents dans la trame qui le comporte.

## Patentansprüche

**1.** Verfahren zur Übertragung von Informationsbytes in einem synchronen Rahmen, der asynchrone Zellen und isochrone Kanäle in einer Zeitmultiplexverbindung vereint, über die Informationen im Verlauf von aufeinanderfolgenden Überrahmen übertragen werden, die je eine gleiche Anzahl von ebenfalls aufeinanderfolgenden Rahmen enthalten, wobei die Rahmen je aus einer gleichen Anzahl von Zeitintervallen bestehen und wobei die Zeitintervalle gleichen Rangs im Verlauf der aufeinanderfolgenden Rahmen einen Informationsübertragungskanal Byte für Byte bilden, wobei ein erster Kanal (TS0) jedes Rahmens für von den zu übertragenden Informationen unabhängige Verwaltungsdaten reserviert ist, dadurch gekennzeichnet, daß zweite Kanäle (TS1) jedes Rahmens im Verlauf eines Überrahmens für Streckendienstdaten reserviert sind, die sich in eine erste Gruppe einer bestimmten Anzahl von zweiten Kanälen bestimmter Ränge, die für Dienstbytes der asynchronen Informationsübertragungszellen reserviert sind, und in eine zweite Gruppe von zweiten Kanälen aufteilen, deren Zahl höchstens der Differenz zwischen der Gesamtzahl der verfügbaren Kanäle im Rahmen und der Anzahl der Kanäle der ersten Gruppe gleicht, wobei diese Kanäle zur Angabe der Anzahl von isochronen Informationsübertragungskanälen bestimmt sind, die im Verlauf des zugehörigen Rahmens sowie gegebenenfalls im Verlauf des nächstfolgenden Rahmens, wenn der zweite Kanal dieses Rahmens ein zweiter Kanal der ersten Gruppe ist, betrieben werden, und daß der dritte Kanal (TS2) jedes der aufeinanderfolgenden Rahmen mindestens zum Teil für einen Kode reserviert ist, der einen Rang des Zellenanfangskanals für jede Zelle definiert, die im Verlauf des betrachteten Rahmens auftritt, wobei die dritten Kanäle Zeitintervallen entsprechen, die unmittelbar denen der zweiten Kanäle folgen, die ihrerseits unmittelbar denen der ersten Kanäle im Verlauf der Rahmen nachfolgen.

2. Übertragungsverfahren nach Anspruch 1 dadurch gekennzeichnet, daß die den nacheinander auf die drei ersten Zeitintervalle während der aufeinanderfolgenden Rahmen folgenden Zeitintervallen entsprechenden Kanäle den isochronen Informationsübertragungskanälen zugewiesen sind, die im Verlauf des betrachteten Rahmens erforderlich sind, während die den späteren Zeitintervallen des Rahmens entsprechenden Kanäle von Informationsübertragungsbytes der Zellen besetzt werden.

3. Übertragungsverfahren nach Anspruch 1, dadurch gekennzeichnet, daß jeder dritte Kanal in jedem Rahmen eine Paritätskontrollangabe enthält, die dem Kode zugeordnet ist, der in diesem Kanal enthalten ist.

4. Übertragungsverfahren nach mindestens einem der Ansprüche 1 bis 3, in dem der Überrahmen 16 Rahmen und der Rahmen 32 Zeitintervalle und die asynchronen Zellen fünf Dienstbytes enthalten, dadurch gekennzeichnet, daß die fünf für die Übertragung der Dienstbytes der Zelle erforderlichen Zeitintervalle während eines Überrahmens auf jeden dritten Rahmen in die zweiten Kanäle der Rahmen ausgehend vom ersten Rahmen des Vielfachrahmens verteilt sind, während die anderen zweiten Kanäle, zwischen die sie in diesen Überrahmen verschachtelt sind, im wesentlichen je die Angabe über die Anzahl von in dem zugehörigen Rahmen enthaltenen isochronen Kanälen tragen.

## Claims

1. Data octet transmission method employing a synchronous frame combining asynchronous cells with isochronous channels on a time-division multiplex interface by means of which data is transmitted during successive multiframes each comprising the same number of frames, said successive frames each being made up of the same number of time slots and time slots with the same number in successive frames constituting an octet-oriented data transmission channel, a first channel (TS0) of each frame being reserved for management data that is independent of the data to be transmitted, characterized in that second channels (TS1) of each frame in a multiframe are reserved for path service data, said data being divided between a first group of a specific number of second channels having specific channel numbers and reserved for asynchronous data cell service octets and a second group of second channels the number of which is at the most equal to the difference between the total number of channels available per frame and the number of channels of the first group, which second channels of said second group are reserved for indicating the number of isochronous data channels used during the frame of which each constitutes a part and optionally during the next frame if the second channel thereof is a second channel of the first group, and in that the third channel (TS2) of each successive frame is at least partially reserved for a code defining a start-of-cell channel number for every cell in the frame in question, said third channels corresponding to time slots immediately succeeding time slots of the second channels immediately succeeding those of the first channels during the frames.

2. Transmission method according to claim 1 characterized in that the channels that correspond to the time slots successively succeeding the first three time slots during successive frames are assigned to the isochronous data channels needed during the frame in question, the channels that correspond to subsequent time slots in the frame being used for the cell data octets.

3. Transmission method according to claim 1 characterized in that each third channel includes in each frame a parity check indication associated with the code contained therein.

4. Transmission method according to any one or more of claims 1 to 3 wherein the multiframe comprises sixteen frames, the frame comprises thirty-two time slots and the asynchronous cells comprise five service octets, characterized in that the five time slots needed for transmission of the cell service octets during a multiframe are distributed every three frames in the second channels of the frames starting from the first frame of the multiframe, each of the remaining second channels between which they are located in said multiframes being assigned to indicate the number of isochronous channels in the frame that carries them.

# FIG. 1

|  | TS0 | TS1 | TS2 | TS3 | TS31 |
|---|---|---|---|---|---|
| T 0 | TS 0 | B1 | C.B | | |
| T 1 | TS 0 | iso | C.B | | |
| T 2 | TS 0 | iso | C.B | | |
| T 3 | TS 0 | G1 | C.B | | |
| T 4 | TS 0 | iso | C.B | | |
| T 5 | TS 0 | iso | C.B | | |
| T 6 | TS 0 | F1 | C.B | | |
| T 7 | TS 0 | iso | C.B | | |
| T 8 | TS 0 | iso | C.B | | |
| T 9 | TS 0 | M1 | C.B | | |
| T10 | TS 0 | iso | C.B | | |
| T11 | TS 0 | iso | C.B | | |
| T12 | TS 0 | M2 | C.B | | |
| T13 | TS 0 | iso | C.B | | |
| T14 | TS 0 | iso | C.B | | |
| T15 | TS 0 | Z1 | C.B | | |

# FIG. 2

| | TS0 | TS1 | TS2 | TS3 | | | | | TS31 |
|---|---|---|---|---|---|---|---|---|---|
| T 0 | TS 0 | B1 | 1AH | | | | | | |
| T 1 | TS 0 | 04H | DBH | | | | TS26 | | |
| T 2 | TS 0 | 04H | 04H | | | | | | |
| T 3 | TS 0 | G1 | B3H | | | TS21 | | | |
| T 4 | TS 0 | 04H | C.B | | | | | | |
| T 5 | TS 0 | 04H | C.B | | | | | | |
| T 6 | TS 0 | F1 | C.B | | | | | | |
| T 7 | TS 0 | 04H | C.B | | | | | | |
| T 8 | TS 0 | 04H | C.B | | | | | | |
| T 9 | TS 0 | M1 | C.B | | | | | | |
| T10 | TS 0 | 04H | C.B | | | | | | |
| T11 | TS 0 | 04H | C.B | | | | | | |
| T12 | TS 0 | M2 | C.B | | | | | | |
| T13 | TS 0 | 04H | C.B | | | | | | |
| T14 | TS 0 | 04H | C.B | | | | | | |
| T15 | TS 0 | Z1 | C.B | | | | | | |

# FIG. 3

|  | TS0 | TS1 | TS2 | TS3 | | | | TS31 |
|---|---|---|---|---|---|---|---|---|
| T 0 | TS 0 | B1 | 1AH | | | | | |
| T 1 | TS 0 | 11H | FFH | | | | | TS30 |
| T 2 | TS 0 | 1AH | 04H | | | | | |
| T 3 | TS 0 | G1 | 04H | | | | | TS31 |
| T 4 | TS 0 | 1AH | 35H | | | | | |
| T 5 | TS 0 | 04H | C.B | | | | | |
| T 6 | TS 0 | F1 | C.B | | | | | |
| T 7 | TS 0 | 04H | C.B | | | | | |
| T 8 | TS 0 | 04H | C.B | | | | | |
| T 9 | TS 0 | M1 | C.B | | | | | |
| T10 | TS 0 | 04H | C.B | | | | | |
| T11 | TS 0 | 04H | C.B | | | | | |
| T12 | TS 0 | M2 | C.B | | | | | |
| T13 | TS 0 | 04H | C.B | | | | | |
| T14 | TS 0 | 04H | C.B | | | | | |
| T15 | TS 0 | Z1 | C.B | | | | | |